# EUROPEAN PATENT SPECIFICATION

(11) **EP 1 226 416 B1**
(45) Date of publication and mention of the grant of the patent: **26.08.2009**
(21) Application number: 00973952.5
(22) Date of filing: 27.10.2000
(51) Int. Cl.: G01N 1/30, G01N 15/14

(54) **CYTOLOGICAL IMAGING SYSTEM AND METHOD**
ZYTOLOGISCHES ABBILDUNGSSYSTEM UND VERFAHREN
SYSTEME ET PROCEDE D'IMAGERIE CYTOLOGIQUE

(30) Priority: 29.10.1999 US 430117; 29.10.1999 US 430196; 29.10.1999 US 430198; 29.10.1999 US 430116
(43) Date of publication of application: 31.07.2002
(73) Proprietor: CYTYC CORPORATION, Marlborough, MA 01752 (US)
(72) Inventor: ZAHNISER, David, J., Wellesley, MA 02481 (US); ZELINSKI, Matthew, S., Worthington, OH 43085 (US); DOLASH, Thomas, Worthington, OH 43085 (US); MAENLE, Garrick, L., Columbus, OH 43201 (US); FLEMING, Mark, Columbus, OH 43212 (US); LAUDO, John, S., Columbus, OH 43235 (US)
(74) Representative: Lawrence, John
(86) International application number: PCT/US2000/029670
(87) International publication number: WO 2001/033191

(56) References cited:
- EP-A- 0 589 191
- WO-A-99/41578
- US-A- 5 284 137
- US-A- 5 869 689
- PATENT ABSTRACTS OF JAPAN vol. 1998, no. 12, 31 October 1998 (1998-10-31) & JP 10 186272 A (SANYO ELECTRIC CO LTD), 14 July 1998 (1998-07-14)
- PATENT ABSTRACTS OF JAPAN vol. 1997, no. 03, 31 March 1997 (1997-03-31) & JP 08 317192 A (RICOH ELEMEX CORP), 29 November 1996 (1996-11-29)

## Description

### Technical Field

This invention relates to an analysis of cytological material. Specifically, the invention relates to methods for imaging stained cells for cytological or histological analysis to contrast the nuclear portion of the cell from the cytoplasmic portion, and systems and methods for illuminating a cytological sample. The analysis can be automated or manual.

### Background Information

Cytology is the branch of biology dealing with the study of the formation, structure, and function of cells. As applied in a laboratory setting, cytologists, cytotechnologists, and other medical professionals make medical diagnoses of a patient's condition based on visual examination of a specimen of the patient's cells. A typical cytological technique is a "Pap smear test, in which cells are scraped from a woman's cervix and analyzed in order to detect the present of abnormal cells, a precursor to the onset of cervical cancer. Cytological techniques are also used to detect abnormal cells and disease in other parts of the human body.

Cytological techniques are widely employed because collection of cell samples for analysis is generally less invasive than traditional surgical pathological procedures such as biopsies, whereby a tissue specimen is excised from the patient using specialized biopsy needles having spring loaded translatable stylets, fixed cannulae, and the like. Cell samples may be obtained from the patient by a variety of techniques including, for example, by scraping or swabbing an area, or by using a needle to aspirate body fluids from the chest cavity, bladder, spinal canal, or other appropriate area. The cell samples are placed in solution and subsequently collected and transferred to a glass slide for viewing under magnification. Fixative and staining solutions are typically applied to the cells on the glass slide, often called a cell smear, for facilitating examination and for preserving the specimen for archival purposes.

A traditional multicolored stain is desirable for staining cell smears for certain cytological analyses. It is advantageous to stain the nucleus and the cytoplasm of the specimen with different colors, so that the nuclear material and cytoplasmic material can be readily distinquished either visually or by automated imaging equipment. In one staining practice, the cytoplasm is transparent, whereas the nucleus is transparent to opaque. This staining pattern allows the cytologist to distinguish cells which are morphologically abnormal indicated, for example, by nuclear material which is excessively large and/or dark in color. In addition, cytologists find the variety of colors of the traditional stains, particularly the Papanicolaou stain, helpful to reduce eye strain and to aid diagnosis.

Traditional stains, including the Papanicolaou stain, are difficult for an automated system to analyze. The variety of colors in the cytoplasm from traditional stains, which are straightforward for the human eye to distinguish, are not readily analyzed with automated imaging systems because they contrast to varying degrees with the traditional blue hematoxylin stain of the nucleus. The varying contrast makes automated analysis unreliable.

During the approximately seventy years since its introduction, the original Papanicolaou stain has undergone many modifications. Currently, the dyes, reagents, and methodology vary widely based on the preferences of each laboratory. While standardization of a Papanicolaoulike stain has been proposed for many years, there has been little incentive for laboratories to do so. This variability affects current imaging technologies which may reject numerous slides either because of problems inherent with a conventional Pap smear preparation, or because of poor staining that produces nuclear-cytoplasmic contrast that is inadequate for image acquisition and analysis.

A number of researchers have developed algorithms in an attempt to attain automated analysis of cells stained with the multicolored Papanicolaou stain. Such techniques involve the use of various instrumental artifacts, such as different colors of light, filters, and color television cameras. Many require a high level of sophistication that is costly in terms of hardware and software. Further, these approaches have not proven accurate and reliable enough to be widely used in clinical cytological and histological diagnoses.

Conventional machine vision illumination sources are low efficiency broadband sources such as tungsten-halogen, sodium-halide, or xenon lamps. These sources convert a small percentage of their input energy broadband light. Accordingly, efficiency drops significantly in a cytological application that requires a narrow band light source. Typically, these devices generate a significant amount of heat, require filters for obtaining correct wavelengths, and are relatively large.

PCT Publication WO 99 41578 A (Douglass-Hamilton et al) describes the use of a "colorimeter" for performing an assisted-reproductive quality assay of sperm cells. The colorimeter is used to measure the light issued from a self luminous body or from a body illuminated by a separate light source. Light from a first (red) LED is briefly pulsed to illuminate a sample, followed by a discrete pulsing of a green LED to illuminate the sample, whereby respective concentrations of red and green dyes that may be present in the sample can be measured. The colorimeter determines the concentration of a red or blue stain in the sperm cell sample as a function of the intensity of the light from the respective red and greed LEDs reflected off the sample.

For the purposes of better understanding the invention, a stain that creates a high contrast between the nucleus and the cytoplasm of a cell is described, as well as staining the cytological material such that the cytoplasm is relatively transparent to an automated machine vision system, but visible to an observer.

For the purposes of better understanding the invention a stain with a dual peak responsiveness when exposed to two distinct light wavelengths, and a system for verifying a specific stain was used based on the dual peak responsiveness, are described.

It is an object of the invention to provide a method of cytological analysis in which the cells are multicoloured and the nuclear portion is readily distinguishable from the cytoplasmic portion, both with automated imaging equipment and with human vision analysis.
It is yet another object to provide a method of cytological analysis in which the characteristics of the stained cells can be accurately determined with both manual and automated analysis procedures.

An additional object of the invention is to provide a system and method for illuminating cytological samples, wherein the illumination is supplied by two different light sources with two different wavelengths. One light source verifies the stain used and the other light source facilitates analysis of the cytological sample

### Summary of Invention

The invention addresses the problems outlined above by means of unique stains, methods for verification of stained cytological material, and illumination systems. Other techniques for addressing some of the drawbacks associated with the traditional Papanicaloau stains are disclosed in U.S. Patent No. 5,168,066.

For the purposes of better understanding the invention a cytological staining solution is described. The solution includes methanol, phenol, and thionin. For example, an acid may be present. The acid can be almost any acid traditionally used to adjust the pH of a solution. For example, acetic acid, nitric acid, hydrochloric acid, phosphoric acid, formic acid, sulfuric acid, or citric acid could be used. The methanol used can be various grades, the phenol source can be loose crystals having an ACS grade of at least about 95%, the thionin can be a certified dye powder, and the acid can be glacial acetic acid of various grades. The ACS grade is an indicator of the purity of the components. Components in accordance with equivalent grading systems are acceptable. In addition, the thionin can be synthesized. For example, the staining solution has an acidic pH value, preferably about 5-7, and more preferably about 6.70 +/-0.05. In one embodiment, the phenol has a weight to volume ratio of about 0.8% to about 1.2%, and preferably about 1.0%. In another example, the thionin has a weight to volume ratio of about 0.2% to about 0.5%, preferably about 0.3% to about 0.4%, and more preferably about 0.345%. The weight to volume ratio, expressed as wt/v, is a measure of the weight of any one component as a percentage of the volume of the entire solution.

For the purposes of better understanding the invention a method of producing a staining solution and counterstaining solution are described. The method includes the steps of mixing methanol, phenol, and thionin, stirring the mixture, filtering the mixture, and adding an acid to adjust the pH value of the mixture to about 6.7. The acid is preferably added slowly while stirring. As discussed above, the acid can be almost any acid traditionally used to adjust the pH of a solution. In one embodiment, the mixture includes an equivalent ratio of about one liter of methanol, about 10 grams of phenol, and about 3.45 grams of organic or synthetic thionin.
The mixture may be filtered using a filter with about a 1-20 micron particle retention. The mixture may be stirred for at least about 1 hour. Counterstaining is where the cells are stained with one or more dyes that are primarily taken up by the cytoplasm. The solution includes a reagent alcohol, eosin Y, thionin, and light or fast green SF yellowish. For example, the reagent alcohol can be 200 proof, the eosin Y, thionin, and light or fast green SF yellowish source can be certified dye powders, and an acid may be present, such as glacial acetic acid, ACS grade 99%. The thionin can be organic or synthetic. In one embodiment, the staining solution has an acidic pH value, preferably about 5-6 and more preferably about 5.50 +/-0.05. In another example, the reagent alcohol consists of about 90% ethanol, 5% isoproponal, and about 5% methanol. In one example, the eosin Y has a wt/v ratio of about 0.05% to about 0.1%, preferably about 0.067% to about 0.08%, and more preferably about 0.0721%. In another embodiment, the thionin has wt/v ratio of about 0.01% to about 0.03%, preferably about 0.015% to about 0.025%, and more preferably about 0.0171%. In another example, the light or fast green SF yellowish has wt/v ratio of about 0.015% to about 0.03% and preferably about 0.0231%.

Another example of a method of producing a counterstaining solution includes the steps of mixing a reagent alcohol, eosin Y, thionin, and light or fast green SF yellowish, stirring the mixture, filtering the mixture, and adding an acid to adjust the pH value of the mixture to about 5.5. As discussed above, the acid can be almost any acid traditionally used to adjust the pH of a solution. For example, the mixture includes an equivalent amount of about one liter of reagent alcohol, about 0.721 grams of eosin Y, about 0.171 grams of organic or synthetic thionin, and about 0.231 grams of light or fast green SF yellowish. In other examples, the mixture is filtered using a filter with about a 1-20 micron particle retention. The mixture may be stirred for at least about 1 hour.

Still for purposes of better understanding the invention a method of staining cytological material with a thionin-phenol solution is described. The thionin-phenol solution binds preferentially to nuclear cytological material relative to cytoplasmic cytological material. The solution can include methanol, phenol, and thionin, and can be about a 0.3% thionin solution. The thionin can be organic or synthetic. For example, the cytological material is dipped into a salt bath prior to staining. The salt bath can be about a 10% salt solution. In another example, the method includes the step of counterstaining the cytological material after staining with the thionin-phenol solution.

The cytological material can be rinsed or dipped in an alcohol bath prior to counterstaining in a counterstain solution which includes a reagent alcohol, eosin Y, thionin, and light or fast green SF yellowish. The thionin can be organic or synthetic. The counterstaining solution binds preferentially to cytoplasmic cytological material relative to nuclear cytological material. The counterstaining solution can include at least one of the components of the thionin-phenol stain, thionin in one example, such that the thionin substantially replenishes the thionin depleted during the rinsing. At least one of the thionin-phenol solution and the counterstaining solution discernibly stain the cytological material in the visible light range, or both the thionin-phenol solution and the counterstaining solution discernibly stain the cytological material in the visible light range. Additionally, the cytological material can be rinsed or dipped into an alcohol bath after counterstaining.

An additional example to counterstaining previously stained material, the counterstain includes a component from the previous stain. The process of counterstaining the previously stained material replenishes any loss of the previous stain component that may have occurred subsequent to the initial staining, for example, through rinsing the material after staining. In one embodiment of this method, the previously stained material is rinsed prior to counterstaining. The rinse can be an alcohol bath.

The invention relates to an optical instrument A cytological imaging system, comprising an imaging system (164) for imaging a stained cytological sample (150); a first light source (152) having a first narrow band wavelength capable in use of verifying a stain used on a cytological sample; and a second light source (152) having a second narrow band wavelength for imaging the cytological sample, wherein the first wavelength is different from the second wavelength, wherein the system is configured to be capable of, in use, illuminating a stained cytological cell sample (150) with the first narrow band wavelength for verifying that a specific stain was used, and of illuminating the stained cytological cell sample with the second narrow band wavelength to image the nuclear material of the sample.

The first light source has a first wavelength, which may be between about 690 nm and about 750nm. The first light source is used to verify a stain used on a cytological sample. The second light source has a second wavelength different than the first wavelength, and may be between about 500 nm and about 600 nm. The second light source is used to illuminate the cytological sample for viewing. In various embodiments, the first light source can be a red light emitting diode (LED) and the second light source can be a green LED or an array of up to eight or more green LEDs. The light source can operate on low voltage, such as 5 volts DC. LEDs are bright, stable, and available in a very wide range of illumination wavelengths. Furthermore, LEDs efficiently produce a narrow band of illumination (typically15 nm), eliminating the need for narrow band filters and allowing all energy (heat) to be put into the desired illumination wavelength. Conventional illumination such as tungsten-halogen bulbs put out a lot of wasted light and heat when narrow band illumination is desired. LEDs generate significantly less heat and require substantially less power than conventional imaging light sources. In fact, standard light sources are often insufficient to obtain the necessary shutter times. In addition, LEDs are relatively tiny.

Many embodiments of the invention will have an LED array. The LED array includes a red LED for verifying the stained sample was stained with a predetermined stain and a green LED for illuminating the cytological sample for imaging. The array can include up to eight or more green LEDs and can operate on low voltage, such as 5 volts DC.

A still further aspect of the invention relates to a system for imaging a cytological sample including nuclear material and cytoplasmic material. The system includes an optical instrument and first and second light sources the first light source, having a first wavelength for verifying some embodiments of the invention will be used with the specific stain permitting transmission of light at a wavelength of about 720nm. The second light source may gave a second wavelength for illuminating the cytological sample for imaging, wherein the stained nucleus of the sample will permit transmission of light at a wavelength of about 570 nm and the cytoplasm will be essentially invisible to the system. In one embodiment, the stain is a thionin-phenol solution, preferably about a 0.3% thionin solution. In another embodiment, the cytoplasm is visible to an observer. In various embodiments, the first light source can be a red LED and the second light source can be a green LED or an array of up to eight or more green LEDs. The light sources can operate on low voltage, such as 5 volts DC.

In another aspect, the invention relates to a method of imaging a cell as defined in the accompanying claims.

Additional embodiments according to the foregoing aspect of the invention may include the following features. The first wavelength is between about 690 nm and about 750nm, and the second wavelength is between about 500 nm and about 600nm. The first light source can be a red LED and the second light source can be a green LED or an array of up to eight or more green LEDs. The light sources can operate on low voltage such as 5 volts DC. The stain used produces a high contrast between the nuclear material and the cytoplasmic material, such that the cytoplasmic material is relatively transparent, or invisible, to an imaging system viewing the cell, but visible to an observer. In particular the nuclear material of the cell may be stained with a thionin-phenol solution, preferably about a 0.3% thionin solution.

For purposes of better understanding the invention, a method for verifying that a specific stain was used on a cytological sample is described. The method includes the steps of staining the cytological sample with a stain having two spectral peaks, at first and second wavelengths, and illuminating the sample with first and second light sources. The first light source has a first wavelength, wherein the specific stain will permit transmission of light at a wavelength of about 720nm. The second light source has a second wavelength, wherein the specific stain will permit transmission of light at a wavelength of about 570nm.

The first wavelength is between about 690 nm and about 750nm, and the second wavelength is between about 500 nm and about 600nm. The first light source can be a red LED and the second light source can be a green LED or an array of up to eight or more green LEDs. The light sources can operate on 5 volts DC. The cytological sample may be stained with a thionin-phenol solution, preferably about a 0.3% thionin solution.

These and other objects, along with advantages and features of the present invention herein disclosed, will become apparent through reference to the following description of embodiments of the invention, the accompanying drawings, and the claims.

### Brief Description Of The Drawings

the drawings, like reference characters generally refer to the same parts throughout the different figures. Also, the drawings are not to scale emphasis instead generally being placed upon illustrating the principles of the invention. Preferred and exemplary embodiments of the present invention are discussed further in the detailed description, with reference to the drawings, which show the following.
Fig. 1 is a chart depicting the characteristics and specifications of a thionin dye.
Fig. 2 is a flow chart of one method of producing a thionin-phenol stain.
Fig. 3 is a chart depicting the characteristics and specifications of an eosin Y dye.
Fig. 4 is a chart depicting the characteristics and specifications of a light green SF yellowish dye.
Fig. 5 is a flow chart of one method of producing a counterstain.
Fig. 6 is a flow chart of one method of staining a cytological material.
Fig. 7 is a flow chart of another method of staining a cytological material.
Fig. 8 is a flow chart of another method of staining a cytological material.
Fig. 9 is a flow chart of another method of staining a cytological material.
Fig. 10 is a schematic of an LED Koehler illumination system.
Fig. 11 is a schematic of an LED fiber illumination system.
Fig. 12 is a schematic of an optics system to couple two LEDs to a fiber optic cable.
Fig. 13A is a schematic side view of an LED multichip module.
Fig. 13B is a schematic top view of an LED multichip module.
Fig. 14A is a schematic representation of one embodiment of an LED cluster.
Fig. 14B is a schematic representation of another embodiment of an LED cluster.
Fig. 14C is a schematic representation of yet another embodiment of an LED cluster.
Fig. 15 is a graph depicting an example of the absorption spectra of the individual components of the stain in solution.
Fig. 16 is a graph depicting another example of the absorption spectra of the individual components of the stain in solution.
Fig. 17 is a graph depicting yet another example of the absorption spectra of the individual components of the stain in solution.
Fig. 18 is a schematic representation of cytological material.
Fig. 19 is a schematic representation of an imaging system and cooperating components in a laboratory setting.

### Detailed Description

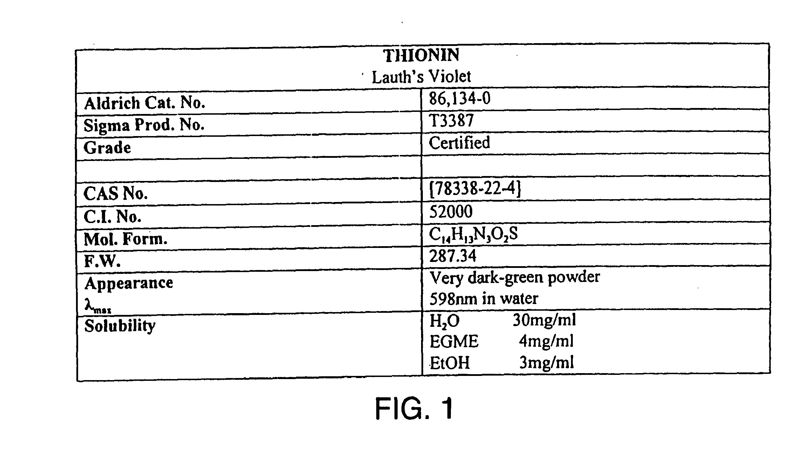

One example of the stain is a thionin-phenol solution that includes methanol, phenol, and thionin. The stain may also include an acid for adjusting the pH of the stain solution. The purity of the methanol (methyl alcohol) component can be various grades The phenol component is supplied as loose crystals having an ACS grade purity of at least about 95%. The phenol is a chaotrophic agent available through Aldrich Chemical Company, Inc. of Milwaukee, WI. The thionin component is supplied as a certified dye powder, specifically a BSC-certified, metachromatic, cationic thiazine dye. Figure 1 depicts the characteristics of the exemplary thionin dye used in the invention as available from Aldrich Chemical Company or SIGMA of St. Louis, MO. The acid for adjusting the pH of the stain can be any one of most common acids, for example, acetic acid, citric acid, nitric acid, hydrochloric acid, phosphoric acid, sulfuric acid, or formic acid.

An acceptable weight per volume (wt/v) ratio of thionin to solution is about 0.2% to about 0.5%wt/v, preferably about 0.3% to about 0.4% wt/v, and more preferably about 0.345% wt/v. The ratio for the phenol is about 0.8% to about 1.2% wt/v and preferably about 1.0% wt/v.

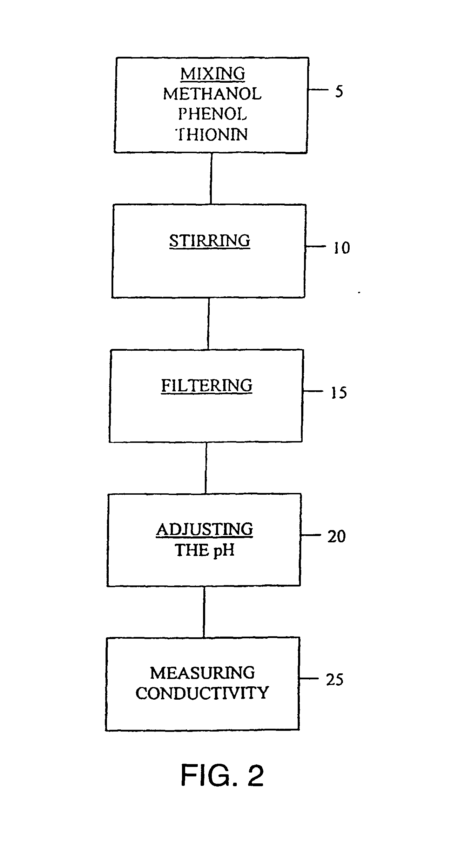

One method of producing the stain is depicted in Figure 2 for purposes of better understanding. Mixing, step 5, entails adding the phenol crystals and thionin dye to the methanol. Next, the mixture is stirred, step 10, optionally vigorously for up to 15 hours. The mixture is then filtered, step 15. The mixture may be gravity filtered through a filter with about a 1-20 micron particle retention and preferably about 2 micron. One example is no. 4 filter paper as available from Whatmann. Finally, the pH level of the mixture is adjusted, step 20, by adding acid to the solution. The mixture may be stirred continuously while adding the acid. The pH is then adjusted to about 5-7 and preferably about 6.7 +/-0.05. Alternatively, one could measure the conductivity of the solution, step 25, by any means known to confirm the correct composition of the solution.

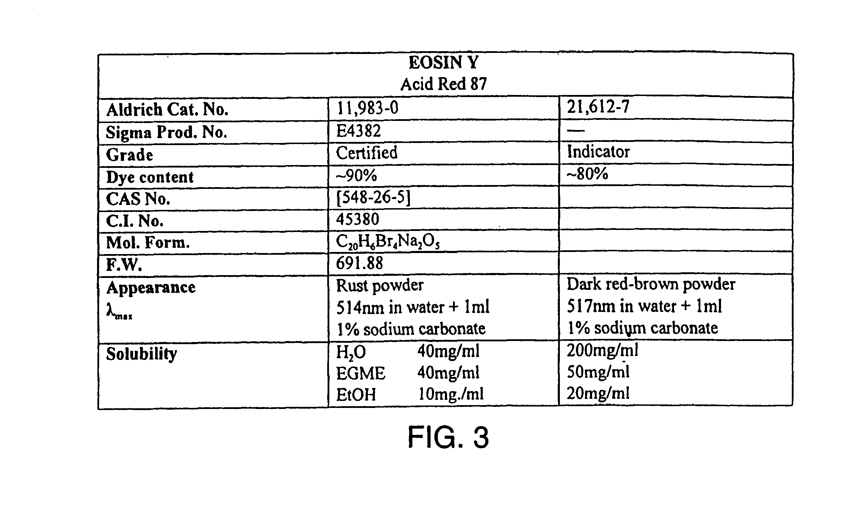

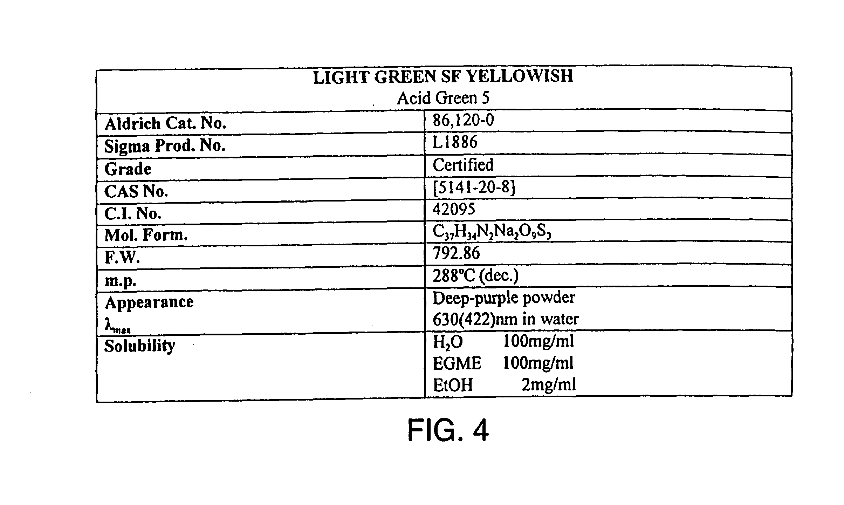

One example of the counterstain, or second stain, includes reagent alcohol, eosin Y, thionin, and light or fast green SF yellowish. An acid for adjusting the pH of the counterstain solution may also be present. The reagent alcohol is 200 proof and may include about 90% ethanol, 5% isopropanol, and 5% methanol. The eosin Y, thionin, and light or fast green SF yellowish certified dye powders.-The eosin Y is a fluorescent (yellow), red xanthene dye made by 2', 4', 5', 7'-tetrabrominating fluorescein. Eosin Y is certified by BSC for use as a counterstain against hematoxylin. Figure 3 depicts the characteristics of one example of the eosin Y dye used in the present invention, as available from Aldrich Chemical Company or SIGMA. The thionin is the same composition as used in the thionin-phenol solution. The light or fast green SF yellowish is a bluish-green, anionic triphenylmethane dye that is very soluble in water and slightly soluble in ethanol. Light or fast green SF yellowish is BSC-certified for use as a cytological counterstain. Figure 4 depicts the characteristics of one example of the light green SF yellowish dye used in the present invention, as available from Aldrich Chemical Company or SIGMA. The acid for adjusting the pH of the stain can be any one of most common acids, for example, acetic acid, citric acid, nitric acid, hydrochloric acid, sulfuric acid, phosphoric acid, or formic acid.

The ratio of eosin Y to solution for the counterstain is about 0.05% to about 0.1% wt/v, preferably about 0.06% to 0.08% wt/v, and more preferably about 0.0721% wt/v. The ratio for the thionin is about 0.01% to about 0.03%wt/v, preferably about 0.015% to 0.025%wt/v, and more preferably about 0.0171% wt/v. The ratio for the light or fast green SF yellowish is about 0.015% to about 0.03% wt/v and preferably about 0.0231 % wt/v.

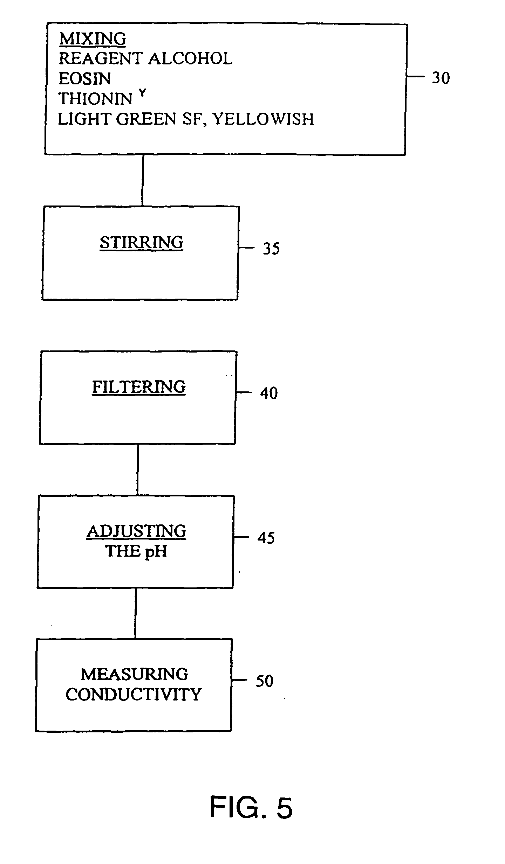

One method of producing the counterstain is depicted in Figure 5. Mixing, step 30, includes adding the eosin Y, thionin, and light or fast green SF yellowish dyes to the reagent alcohol. Next, the mixture is stirred, step 35, optionally vigorously, and preferably for up to 15 hours. The mixture is then filtered, step 40. The mixture may be gravity filtered through a filter with about a 1-20 micron particle retention and preferably about 2 micron. One example is no. 4 filter paper as available from Whatmann. Finally, the pH level of the mixture is adjusted, step 45, by adding acid to the solution. The mixture maybe stirred continuously while adding the acid. The pH is then adjusted to about 5 to 6 and preferably about 5.5 +/- 0.05. Alternatively, one could measure the conductivity of the solution, step 50, by any means known to confirm the correct composition of the solution.

A method of staining cytological material according to the invention provides improved contrast of the nucleus relative to the cytoplasm over conventional staining methods. The method produces multicolored cells suitable for manual analysis, and is also highly effective in automated analysis systems. The method entails the steps of staining the cytological material with a thionin-phenol stain, counterstaining, illuminating the stained material, and imaging the stained cytological material.

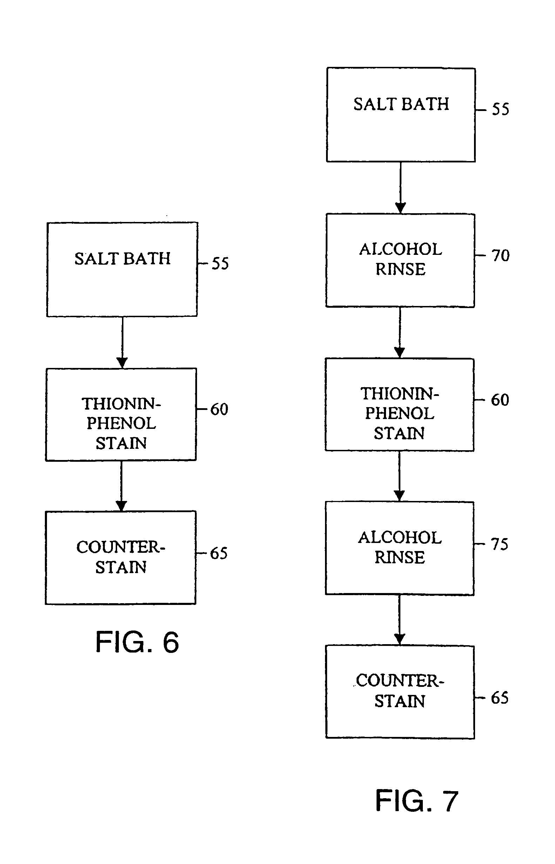

In one embodiment, the cells are stained by the method shown in Figure 6. The cytological specimen is dipped or rinsed in a salt bath, step 55 of about a 10% salt solution. The solution is about 50% alcohol; wherein, the alcohol is 200 proof and consists of about 90% ethanol, about 5% isopropanol, and about 5% methanol. Step 60 entails staining the cells with a thionin-phenol stain. The stain may be about a 0.3% thionin solution. Step 65 entails counterstaining the cells with a second stain. The second stain may include thionin.

In another embodiment, the cells are stained by the method shown in Figure 7. The cytological specimen is dipped or rinsed in a salt bath, step 55. Next the cells are dipped or rinsed in alcohol, step 70. Step 60 entails staining the cells with a thionin-phenol stain, and step 75 entails dipping or rinsing the cells in alcohol. Lastly, step 65 counter stains the cells with a second stain.

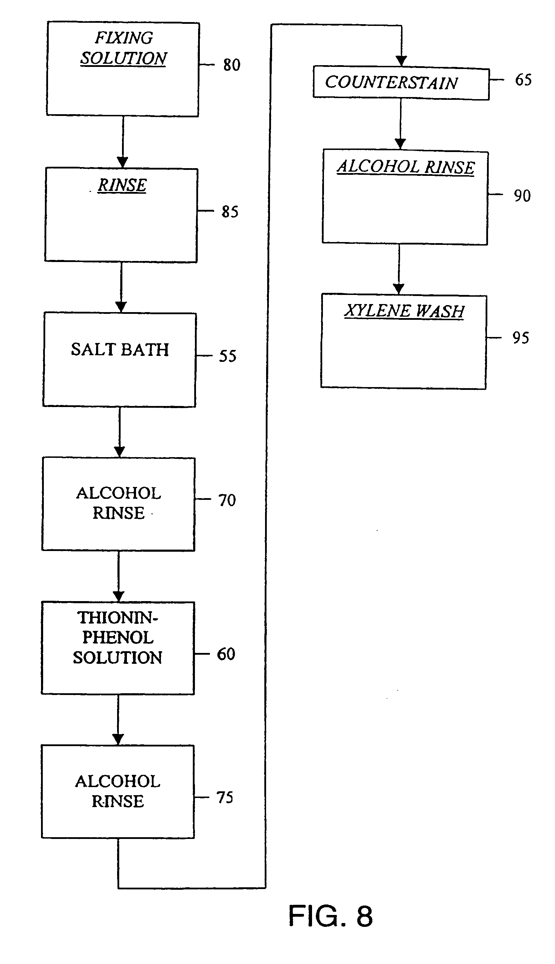

According to one practice of the invention, the cells are stained by the general method shown in Figure 8. The cells are fixed on the slide, step 80, rinsed in alcohol and/or water baths, step 85, rinsed in a salt bath, step 55, rinsed in alcohol, step 70, and stained with a thionin-phenol stain solution, step 60. The stained cells are rinsed in an alcohol bath, step 75, and counterstained, step 65. After counterstaining, the stained cells are rinsed in alcohol, step 90, and rinsed in xylene or other commercially available xylene substitutes, step 95.

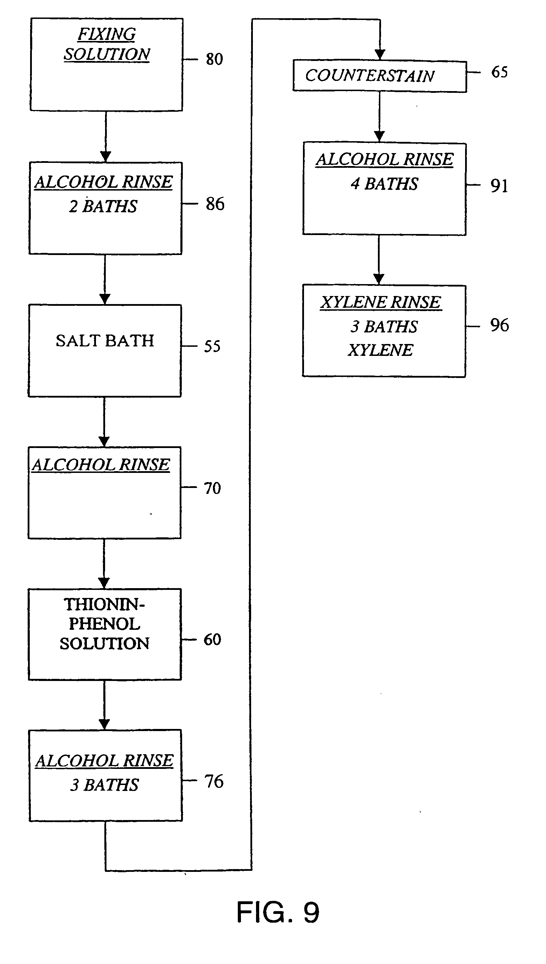

As shown in Figure 9, the cells are first fixed on a slide using alcohol and wax, or other method known in the art, step 80. Then, in preparation for staining, the slide is dipped ten to twenty times in each of two baths, where one is a high percentage, low molecular weight alcohol, preferably ethanol, and the other is an alcohol bath or a water bath, step 86. Next, the cells are dipped in a salt bath for about five to about fifteen minutes, generally for about ten minutes, step 55, after which the cells are rinsed in an alcohol bath, step 70. The cells are then stained in a thionin-phenol stain solution, step 60, for a time sufficient to incorporate the thionin dye in the nuclei, which may range from three minutes to about thirty minutes, but is typically about ten minutes. The staining time can be determined by taking several factors into account, including the desired intensity of the stain appropriate for the cell type and the viewing system used. Automated imaging systems generally require darker staining than human visual evaluation, and certain types of cells stain faster than others. Also, the amount of thionin in the stain can affect the staining time. Lower concentrations of thionin will generally require longer staining times. A thionin stain useful for most cells is slightly acidic, typically having a pH of about 6.7.

After rinsing by dipping ten to twenty times in each of two to three high percentage, low molecular weight alcohol baths, followed by a third bath lasting approximately five minutes in a high percentage, low molecular weight alcohol, step 76, the cells are counterstained, step 65, for a time sufficient to incorporate the dye in the cytoplasm and nuclei, which may range from about two minutes to about thirty minutes, but is generally about four minutes. The staining time may vary, as discussed hereinabove. The counterstain also includes thionin in an amount sufficient to replenish the thionin that may have been depleted during the dipping and rinsing steps, and is selected to absorb light at a different wavelength from the thionin-stained nuclear material. After staining and counterstaining, the slide is rinsed by dipping in two to four more high percentage, low molecular weight alcohol baths, step91, and two or more xylene rinses or other commercially available xylene substitutes, step 96. The cells are now ready to be analyzed.

When viewed under visible light, the nuclei of the cells are transparent to opaque and stained a deep blue. The cytoplasm is transparent and is multicolored, with the specific color pattern depending on the counterstain used. When cells are stained in this manner, the color pattern is familiar to cytologists, so analysis can readily be carried out by manual, i.e., human vision. The method has the added advantage in that, when viewed by an imaging system, each nucleus is opaque and the cytoplasm is nearly invisible resulting in very high contrast between nuclear and cytoplasmic material and thereby providing high resolution. With the cytoplasm nearly invisible, overlapping cells will not be confused with nuclei, and an accurate cell count can be achieved readily, manually or by computer.

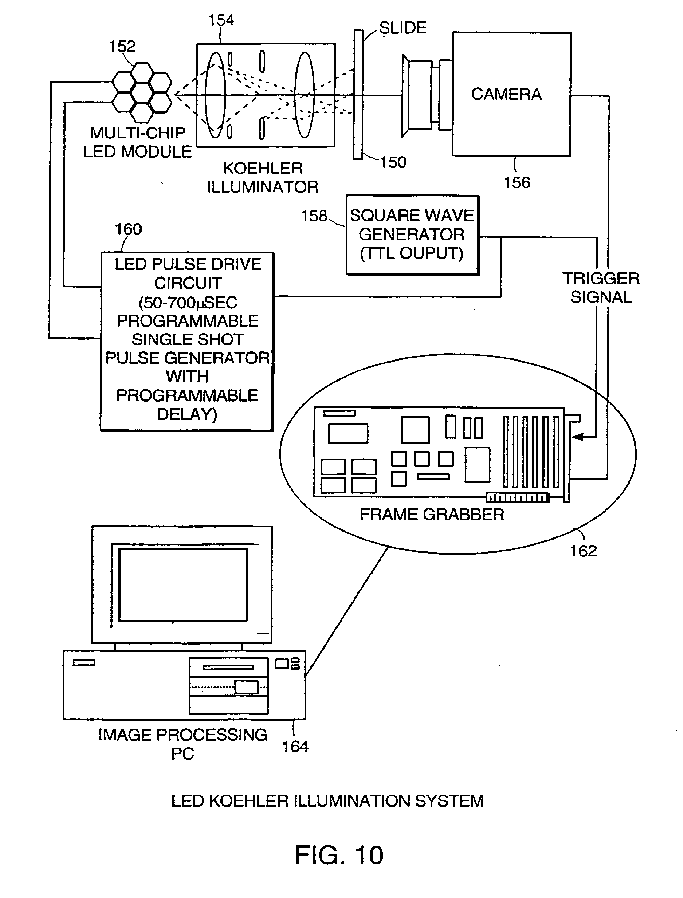

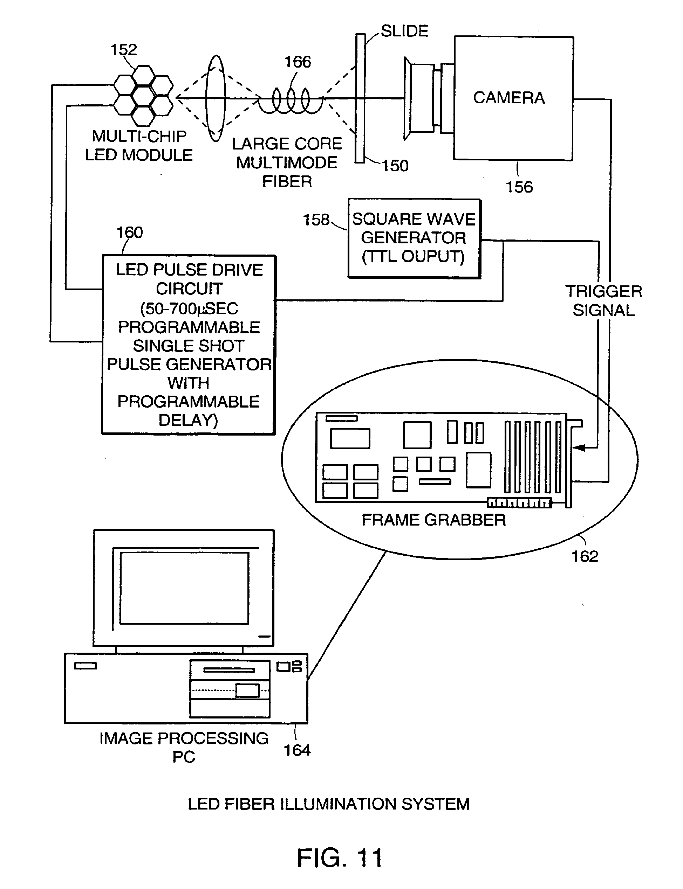

Referring now to Figures 10 and 11, one purpose of an optical instrument lighting system in accordance with the present invention is to provide high intensity narrow band light for imaging a cytological specimen on a microscope slide 150. This purpose is implemented using high brightness LEDs in either a single discrete LED, combination of single discrete LEDs, or custom multi-chip LED module configuration 152. LEDs generate a small amount of heat, which restricts the amount of current at which they can be driven before output wavelengths shift, consequently, restricting the amount of light which these devices emit. To increase the light output from the device, the LEDs may be driven with a pulse circuit 160 that is synchronized with a camera 156 of the imaging system 164 to deliver short, intense pulses of light to the camera during the camera integration period.

The LED pulse is synchronized with the camera frame integration by providing a external trigger that triggers both the camera/frame grabber 162 and the LED pulse driver 160, for example using a square wave generator 158. The camera 156 does not respond instantaneously to the trigger. To compensate for this delay, the pulse drive circuit 160 has a programmable delay that is used to synchronize the systems. Other synchronization methods are possible, depending on the camera type and actual implementation.

LEDs inherently produce spatially nonuniform light output and some machine vision imaging applications require reasonably uniform illumination of the sample. For situations
where uniformity is an issue, two types of systems for generating spatially uniform illumination may be used with LEDs, namely, Koehler and fiber optic systems. The LEDs used in either of these systems may be discrete LEDs packaged in close proximity or multiple LED dies may be integrated on a single substrate to produce a more dense arrangement.

Koehler illumination (see Figure 10) is a standard technique for producing uniform illumination of a microscope slide 150 from the spatially nonuniform filament of an incandescent lamp used in traditional microscope illuminators. As determined by testing, this technique is equally effective at achieving uniformity when employed with LED sources. In this embodiment of the LED illuminator, individual LEDs are packaged closely together and placed in the general position of the lamp filament in the traditional Koehler illuminator 154 and positioned for Koehler illumination.

In another embodiment for achieving uniformity, multiple LEDs are coupled into a large core (=500 to 600 µm) optical fiber 166 with lenses or other optical apparatus, See Figure 11. The length of the fiber is selected so that the spatial nonuniformities of the LEDs are mixed together and a relatively uniform spatial output from the fiber 166 is achieved. In practice, the output of the fiber 166 is approximately Gaussian in spatial profile. The fiber 166 may have to be displaced from the microscope slide 150, such that only the central, relatively flat, portion of the output is used.

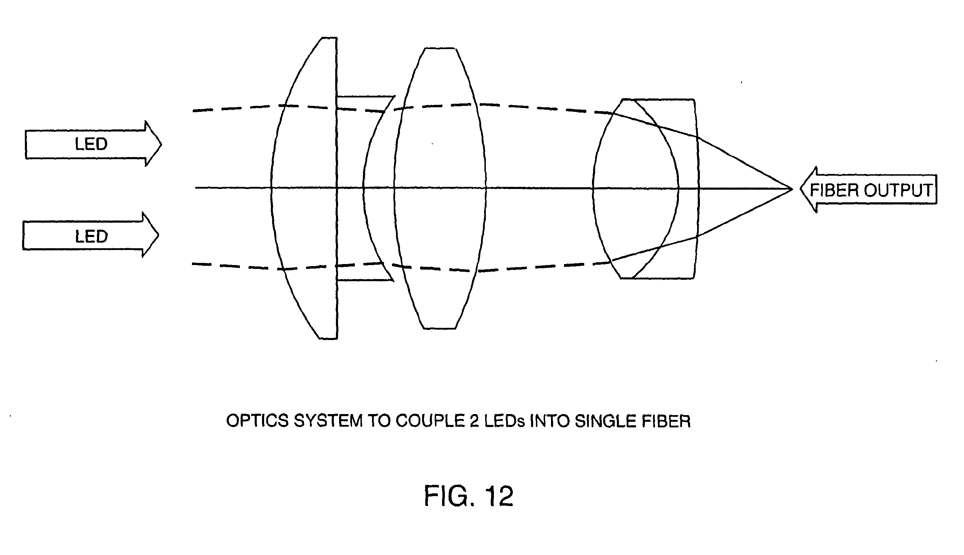

Consider the case where the multi-chip LED module 152 contains two LEDs. Two discrete LEDs having a full-angle divergence of 8 degrees are placed side-by-side such that both emitters fall within a 4 mm diameter. The lenses collect the light and image both emitters onto the 600 µm core of the fiber 166. See Figure 12. The package diameter of individual LEDs is typically on the order of 3-5 mm. Thus, it may be necessary to remove some of the nonessential plastic packaging on a standard LED in order to get the two emitters side-by-side within 4 mm.

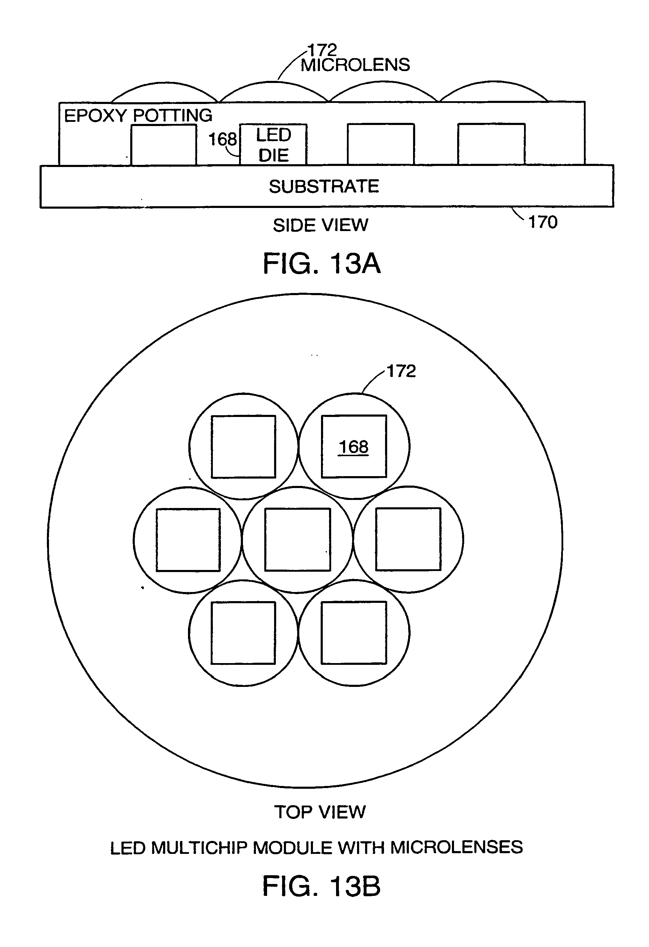

As an alternative to individual LEDs, multiple LED dies 168 may be placed on a single substrate 170 See Figures 13A and 13B. Individual lenses 172 can be placed above each die 168 so that the radiation from each die 168 is collected into a narrow cone, rather than being spread into 2x steradians. Microlenses with diameters of about 1 mm are commercially available. A hexagonal pattern of 1 mm lenses could pack about twelve LED die 168 onto a single substrate 170 with a diameter of about 4 mm. A substrate 170, such as one with high thermal conductivity, may be used to hold multiple LED dies 168. Conductive patterns on the substrate 170 are used to wire bond the dies 168 to the substrate 170 for electrical connections. The dies 168 are potted in a polymer, for example an epoxy, for protection from moisture and other elements. The individual microlenses 172 are placed on top to provide collection of the light into a narrow cone.

An extension of this concept consists of combining different wavelength LEDs to produce a light source which emits multiple narrow wavelength bands. This technique provides a method to illuminate objects such as cytological specimens on microscope slides at multiple wavelengths simultaneously. Further, the output bands can be tailored to the application by selection of appropriate LEDs. The energy from each band can be tailored to the application by employing separate drive systems, pulsed or continuous as required, for each wavelength.

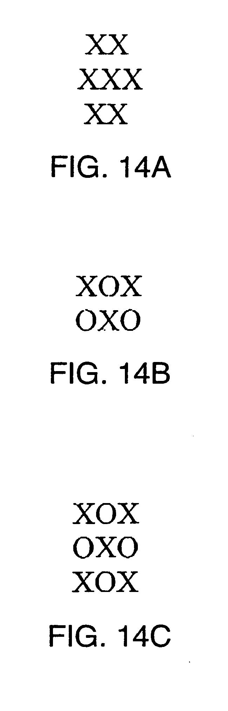

In one embodiment, a cluster or array of seven LEDs replaces the standard incandescent microscope illumination. The LEDs are oriented in the configuration shown in Figure 14A. Different spatial orientations may be used to obtain two colors. One, shown in Figure 14B, provides for two triplets of LEDs where "X" represents one color LED and "O" represents another. Two wavelengths are selected, one allowing optimal nuclear detection among red cytoplasm and the other allowing optimal nuclear detection among green cytoplasm. The second orientation as shown in Figure 14C allows for nine LEDs, with four illuminating one color and five illuminating the other color. In additional embodiments, the LED array may include essentially any combination of the two different color LEDs, such as one red LED and eight green LEDs. Choices of the color and number of LEDs depends on desired brightness, camera response at the selected wavelengths, and availability of LEDs with specific emission angles, for example, 35 degree and 65 degree emission angle LEDs. Typical angles range from about 24 to about 72 degrees. The red LEDs are used for exposing the stained cytological material to a light source having a wavelength of about 690 nm to about 750 nm to determine that a specific stain was used. The green LEDs having a wavelength of about 500 nm to about 600 nm are used to illuminate the cytological material for imaging. Multiple green LEDs are desirable, because increased imaging response times can be achieved with the increased illumination.

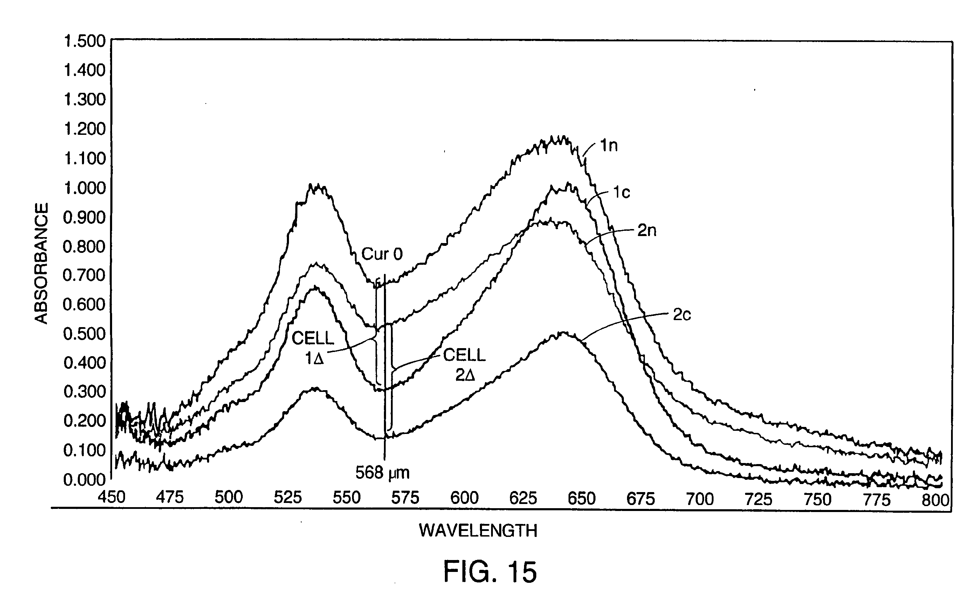

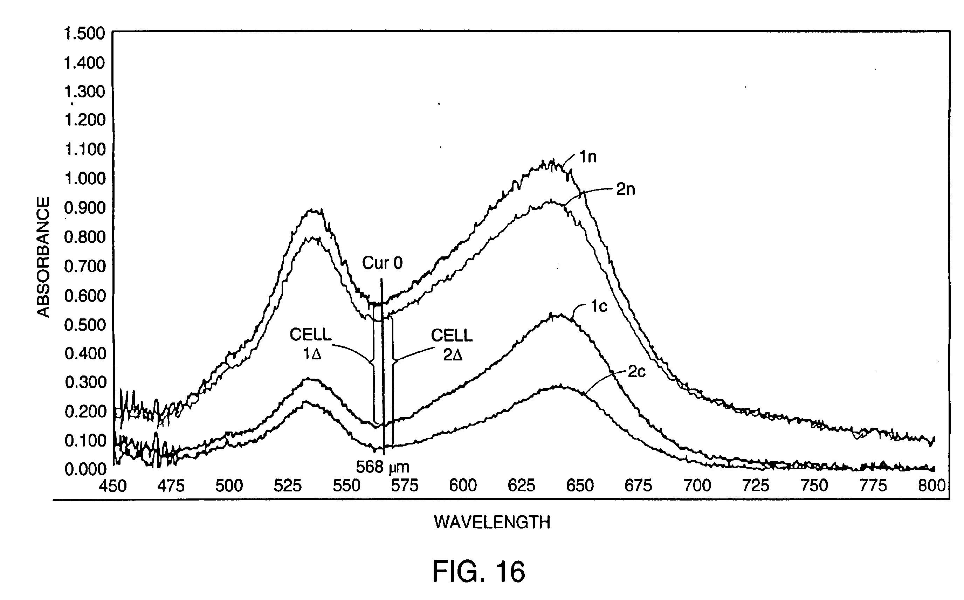

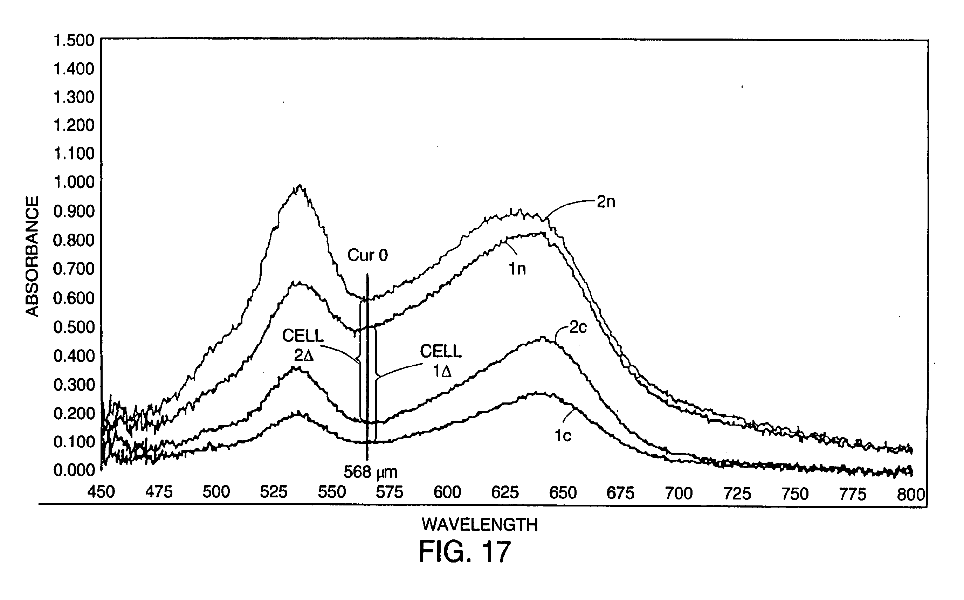

Figures 15-17 depict various examples of the absorption spectra of the individual components of the stains in solution. Two peaks are readily apparent from the graphs. One peak is associated with red light and the other is associated with green light. It is generally desirable to insane the cytological material at a wavelength at which green and red light is minimally transmitted, i.e., the valley formed between the two spectral peaks, in this instance about 568nm.

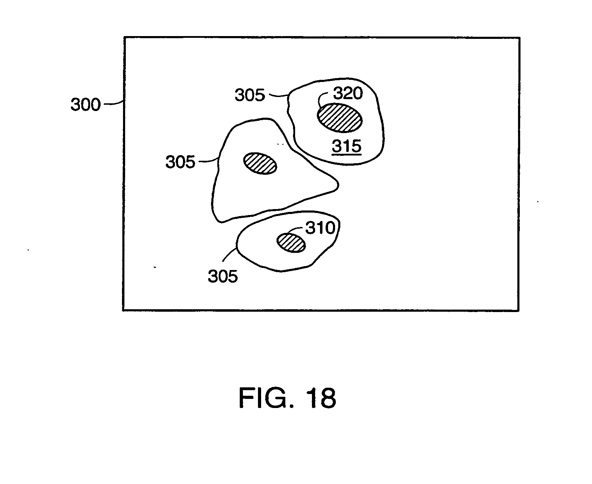

Figure 18 is a schematic representation of cytological material as it may be seen on a typical slide 300. Each cell 305 consists of a nucleus 310 and cytoplasm 315. A representative abnormal nucleus 320 is also shown.

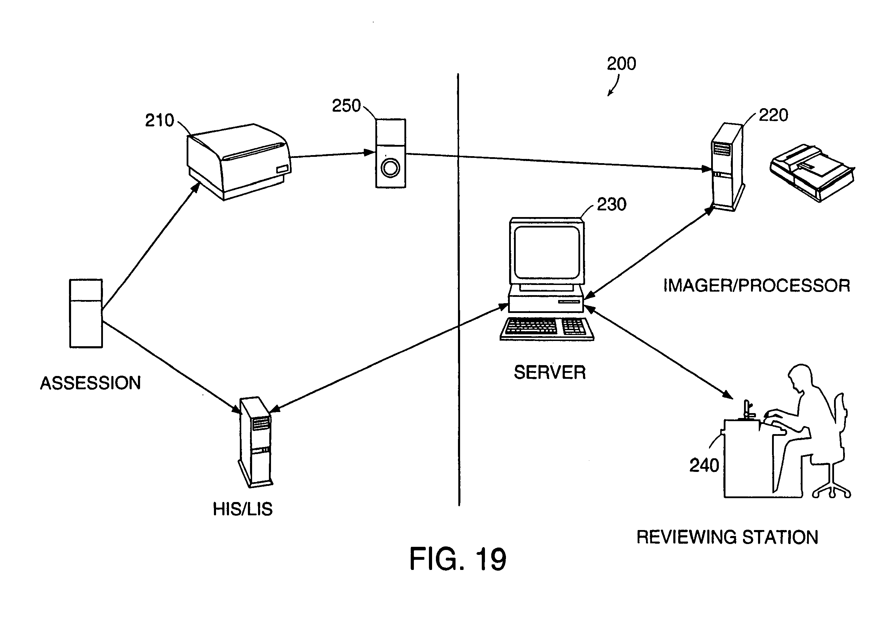

Figure 19 is a schematic representation of an imaging system and related components in a laboratory setting. The overall system 200 may include a system 210 for preparing slides 250 with cytological material for review, an imager/processor 220 for imaging the cytological material and processing the pertinent data, a compute server 230 for storing and/or further processing the data, and a reviewing station 240 for manually reviewing the slides based on data collected by the imager 220.

Having described certain preferred and exemplary embodiments of the invention, it will be apparent to those of ordinary skill in the art that other embodiments incorporating the concepts disclosed herein can be used without departing from the scope of the invention. The described embodiments are to be considered in all respects only as illustrative and not limiting. Therefore, it is intended that the scope of the present invention be only limited by the following claims.

## Claims

1. A cytological imaging system, comprising:
an imaging system (164) for imaging a stained cytological sample (150);
a first light source (152) having a first narrow band wavelength capable in use of verifying a stain used on a cytological sample; and
a second light source (152) having a second narrow band wavelength for imaging the cytological sample, wherein the first wavelength is different from the second wavelength, wherein the system is configured to be capable of, in use, illuminating a stained cytological cell sample (150) with the first narrow band wavelength for verifying that a specific stain was used, and of illuminating the stained cytological cell sample with the second narrow band wavelength to image the nuclear material of the sample.

2. The system of claim 1, wherein the first light source comprises a red LED.

3. The system of claim 1, wherein the second light source comprises a green LED.

4. The system of claim 1, wherein the second light source comprises an array of multiple green LEDs.

5. The system of claim 1, wherein the first wavelength is between about 690 nm and about 750 nm.

6. The system of claim 1, wherein the second wavelength is between about 500 nm and about 600 nm.

7. The system of claim 1, wherein the first and second light sources comprise an LED array including a red LED for verifying the stained sample was stained with a predetermined stain, and a green LED for illuminating the cytological sample for imaging.

8. The system of claim 7, the LED array comprising multiple green LEDs.

9. The system of claim 7, wherein the LED array operates on low voltage.

10. The system of claim 7, wherein the LED array operates on 5 volts DC.

11. The system of claim 1 wherein the imaging system (164) includes a camera (156).

12. The system of claim 11 wherein the imaging system (164) includes a frame grabber (162).

13. The system of claim 13 further comprising an image processor (164) capable of processing images grabbed by the frame grabber (162).

14. The system of claim 7, the LED array comprising multiple red LEDs.

15. The system of claim 7, the LED array comprising multiple red LEDs and multiple green LEDs.

16. The system of claim 15, comprising nine LEDs.

17. The system of claim 7, wherein the LEDs are mounted on a single substrate.

18. A method for imaging a stained cytological cell sample, the method comprising the steps of:
illuminating the stained cell sample with a first narrow band wavelength;
verifying that a specific stain was used to stain the cell sample using light of the first narrow band wavelength; and
illuminating the stained cell sample with a second, narrow band wavelength that is different to the first wavelength;
imaging the nuclear material using light of the second narrow band wavelength.

19. The method of claim 18 further comprising the steps of:
staining nuclear material of the cell; and
staining cytoplasmic material of the cell.

20. The method of claim 18 comprising using a frame grabber (162) to grab a frame of an image from a camera (156) that is imaging the cytological sample.

21. The method of claim 18, wherein the first narrow band wavelength comprises light emitted from one or more red LEDs, and the second narrow band wavelength comprises light emitted from one or more green LEDs.

22. The method of claim 18, wherein the first narrow band wavelength is between about 690 nm and about 750 nm, and the second narrow band wavelength is between about 500 nm and about 600 nm.

23. The method of claim 18, wherein the first narrow band wavelengths are emitted from an LED array including one or more red LEDs, and the second narrow band wavelengths are emitted from an LED array including one or more green LEDs.

## Patentansprüche

1. Zytologisches Abbildungssystem, das aufweist:
ein Abbildungssystem (164) zum Abbilden einer eingefärbten zytologischen Probe (150);
eine erste Lichtquelle (152) mit einer ersten Schmalbandwellenlänge, die im Einsatz eine Einfärbung verifizieren kann, die auf einer zytologischen Probe verwendet wurde; und
eine zweite Lichtquelle (152) mit einer zweiten Schmalbandwellenlänge zum Abbilden der zytologischen Probe, wobei die erste Wellenlänge sich von der zweiten Wellenlänge unterscheidet, wobei das System gestaltet ist, um im Einsatz die eingefärbte zytologische Zellprobe (150) mit einer ersten Wellenbandlänge auszuleuchten zu können, um zu verifizieren, dass eine bestimmte Einfärbung verwendet wurde, und zum Ausleuchten der eingefärbten zytologischen Zellprobe mit der zweiten Schmalbandwellenlänge, um das Kernmaterial der Probe abzubilden.

2. System gemäß Anspruch 1, wobei die erste Lichtquelle eine rote LED aufweist.

3. System gemäß Anspruch 1, wobei die zweite Lichtquelle eine grüne LED aufweist.

4. System gemäß Anspruch 1, wobei die zweite Lichtquelle eine Reihe von mehreren grünen LEDs aufweist.

5. System gemäß Anspruch 1, wobei die erste Wellenlänge zwischen etwa 690 nm und etwa 750 nm liegt.

6. System gemäß Anspruch 1, wobei die zweite Wellenlänge zwischen etwa 500 nm und etwa 600 nm liegt.

7. System gemäß Anspruch 1, wobei die erste und zweite Lichtquelle eine LED-Reihe aufweisen, die eine rote LED erhält, um zu verifizieren, dass die eingefärbte Probe mit einem bestimmten Einfärbemittel eingefärbt wurde, und eine grüne LED zum Ausleuchten der zytologischen Probe zum Abbilden.

8. System gemäß Anspruch 7, wobei die LED-Reihe mehrere grüne LEDs aufweist.

9. System gemäß Anspruch 7, wobei die LED-Reihe mit niedriger Spannung arbeitet.

10. System gemäß Anspruch 7, wobei die LED-Reihe mit 5 Volt Gleichstrom arbeitet.

11. System gemäß Anspruch 1, wobei das Bildgebungssystem (164) eine Kamera (156) enthält.

12. System gemäß Anspruch 11, wobei das Bildgebungssystem (164) einen Bilddigitalisierer (Framegrabber) (162) enthält.

13. System gemäß Anspruch 13, das weiterhin einen Bildverarbeiter (164) aufweist, der Bilder verarbeiten kann, die vom Bilddigitalisierer (162) erfasst wurden.

14. System gemäß Anspruch 7, wobei die LED-Reihe mehrere rote LEDs aufweist.

15. System gemäß Anspruch 7, wobei die LED-Reihe mehrere rote LEDs und mehrere grüne LEDs aufweist.

16. System gemäß Anspruch 15, das neun LEDs aufweist.

17. System gemäß Anspruch 7, wobei die LEDs auf einem einzelnen Trägermaterial angebracht sind.

18. Verfahren zum Abbilden einer eingefärbten zytologischen Zellprobe, wobei das Verfahren die Schritte aufweist:
Ausleuchten der eingefärbten Zellprobe mit einer ersten Schmalbandwellenlänge;
Verifizieren, dass eine bestimmte Einfärbung verwendet wurde, um die Zellprobe mit dem Licht von der ersten Schmalbandwellenlänge einzufärben; und
Ausleuchten der eingefärbten Zellprobe mit einer zweiten Schmalbandwellenlänge, die sich von der ersten Wellenlänge unterscheidet;
Abbilden des Kernmaterials mittels Licht von der zweiten Schmalbandwellenlänge.

19. Verfahren gemäß Anspruch 18, weiterhin die Schritte aufweisend:
Einfärben von Zellkernmaterials;
und Einfärben des zytoplasmatischen Zellmaterials.

20. Verfahren gemäß Anspruch 18, das weiterhin die Verwendung eines Bilddigitalisierers (162) aufweist, um einen Rahmen (Frame) eines Bildes von einer Kamera (156) zu erfassen, die die zytologische Probe abbildet.

21. Verfahren gemäß Anspruch 18, wobei die erste Schmalbandwellenlänge Licht aufweist, das von einer oder mehreren roten LEDs ausgestrahlt wird, und die zweite Schmalbandwellenbandlänge Licht aufweist, die von einer oder mehreren grünen LEDs ausgestrahlt wird.

22. Verfahren gemäß Anspruch 18, wobei die erste Schmalbandwellenlänge zwischen etwa 690 nm und etwa 750 nm liegt und die zweite Schmalbandwellenlänge zwischen etwa 500 nm und etwa 600 nm liegt.

23. Verfahren gemäß Anspruch 18, wobei die erste Schmalbandwellenlängen von einer LED-Reihe ausgestrahlt werden, die eine oder mehrere rote LEDs enthalten, und die zweite Schmalbandwellenbandlängen von einer LED-Reihe ausgestrahlt werden, die eine oder mehrere grüne LEDs enthalten.

## Revendications

1. Système d'imagerie cytologique, comprenant :
un système d'imagerie (164) pour imager un échantillon cytologique taché (150) ;
une première source de lumière (152) ayant une première longueur d'onde de bande étroite capable en utilisation de vérifier une tache utilisée sur un échantillon cytologique ; et
une deuxième source de lumière (152) ayant une deuxième longueur d'onde de bande étroite pour imager l'échantillon cytologique, dans lequel la première longueur d'onde est différente de la deuxième longueur d'onde, dans lequel le système est configuré pour être capable, en utilisation, d'illuminer un échantillon de cellule cytologique taché (150) avec la première longueur d'onde de bande étroite pour vérifier qu'une tache spécifique a été utilisée, et d'illuminer l'échantillon de cellule cytologique taché avec la deuxième longueur d'onde de bande étroite pour imager la matière nucléaire de l'échantillon.

2. Système selon la revendication 1, dans lequel la première source de lumière comprend une LED rouge.

3. Système selon la revendication 1, dans lequel la deuxième source de lumière comprend une LED verte.

4. Système selon la revendication 1, dans lequel la deuxième source de lumière comprend un réseau de multiples LED vertes.

5. Système selon la revendication 1, dans lequel la première longueur d'onde est entre environ 690 nm et environ 750 nm.

6. Système selon la revendication 1, dans lequel la deuxième longueur d'onde est entre environ 500 nm et environ 600 nm.

7. Système selon la revendication 1, dans lequel les première et deuxième sources de lumière comprennent un réseau de LED comprenant une LED rouge pour vérifier que l'échantillon taché a été taché avec une tache prédéterminée, et une LED verte pour illuminer l'échantillon cytologique pour l'imagerie.

8. Système selon la revendication 7, le réseau de LED comprenant de multiples LED vertes.

9. Système selon la revendication 7, dans lequel le réseau de LED fonctionne à basse tension.

10. Système selon la revendication 7, dans lequel le réseau de LED fonctionne à 5 volts CC.

11. Système selon la revendication 1, dans lequel le système d'imagerie (164) comprend une caméra (156).

12. Système selon la revendication 11, dans lequel le système d'imagerie (164) comprend un dispositif de prise de trame (162).

13. Système selon la revendication 12, comprenant en outre un processeur d'images (164) capable de traiter des images prises par le dispositif de prise de trame (162).

14. Système selon la revendication 7, le réseau de LED comprenant de multiples LED rouges.

15. Système selon la revendication 7, le réseau de LED comprenant de multiples LED rouges et de multiples LED vertes.

16. Système selon la revendication 15, comprenant neuf LED.

17. Système selon la revendication 7, dans lequel les LED sont montées sur un substrat unique.

18. Procédé pour imager un échantillon de cellule cytologique taché, le procédé comprenant les étapes consistant à :
illuminer l'échantillon de cellule taché avec une première longueur d'onde de bande étroite ;
vérifier qu'une tache spécifique a été utilisée pour tacher l'échantillon de cellule en utilisant une lumière de la première longueur d'onde de bande étroite ; et
illuminer l'échantillon de cellule taché avec une deuxième longueur d'onde de bande étroite qui est différente de la première longueur d'onde ;
imager la matière nucléaire en utilisant une lumière de la deuxième longueur d'onde de bande étroite.

19. Procédé selon la revendication 18, comprenant en outre les étapes consistant à :
tacher la matière nucléaire de la cellule ; et
tacher la matière cytoplasmique de la cellule.

20. Procédé selon la revendication 18, comprenant l'utilisation d'un dispositif de prise de trame (162) pour prendre une trame d'une image à partir d'une caméra (156) qui est en train d'imager l'échantillon cytologique.

21. Procédé selon la revendication 18, dans lequel la première longueur d'onde de bande étroite comprend une lumière émise d'une ou plusieurs LED rouges, et la deuxième longueur d'onde de bande étroite comprend une lumière émise d'une ou plusieurs LED vertes.

22. Procédé selon la revendication 18, dans lequel la première longueur d'onde de bande étroite est entre environ 690 nm et environ 750 nm, et la deuxième longueur d'onde de bande étroite est entre environ 500 nm et environ 600 nm.

23. Procédé selon la revendication 18, dans lequel les premières longueurs d'onde de bande étroite sont émises à partir d'un réseau de LED comprenant une ou plusieurs LED rouges, et les deuxièmes longueurs d'onde de bande étroite sont émises à partir d'un réseau de LED comprenant une ou plusieurs LED vertes.
